# EUROPEAN PATENT APPLICATION

(11) **EP 3 579 550 A1**
(43) Date of publication of application: **11.12.2019**
(21) Application number: 18212667.2
(22) Date of filing: 14.12.2018
(51) Int. Cl.: H04N 5/50, H04N 21/45, H04N 21/442, H04N 21/443, H04N 21/438

(54) **METHOD AND SYSTEM FOR AUTOMATICALLY SELECTING A TELEVISION CHANNEL**

(30) Priority: 05.06.2018 TW 107119264
(71) Applicant: Top Victory Investments Limited, KWun Tong, Kowloon 999077 (HK)
(72) Inventor: Hsu, Hung-Wang, 23553 Zhonghe Dist., New Taipei City (TW); Hsiao, Shih-Chieh, 10348 Datong Dist., Taipei City (TW)
(74) Representative: V.O.

(57) **Abstract**

A method for automatically selecting a television channel is implemented by a television device (100) and includes: establishing a database (22) including lists of viewing history associated with specific time slots of a day; and upon receiving a power-up command, determining a time instant of receipt of the power-up command, identifying a television channel based on the list of viewing history associated with the time instant, and performing a demodulating operation on a television signal so as to obtain a channel signal from the selected the television channel, and outputting the channel signal.

## Description

The disclosure relates to a method and a system for automatically selecting a television channel, particularly to a method and a system for automatically selecting a television channel upon powering up of a television device.

A conventional television is configured to, when powered up, broadcast a television channel that was being broadcasted at a moment when the television was powered off. Some televisions incorporate functionalities such as an electronic program list, that enables a user to set a preferred channel or a preferred program which the television may automatically broadcast and/or record content of. Additionally, the user may be able to create a favorite channel list for allowing the user to surf among the channels in the favorite channel list that meet the user's preference.

One object of the disclosure is to provide a method that is capable of automatically selecting a television channel.

According to one embodiment of the disclosure, the method is implemented by a television device that includes a processor, a demodulator that receives a television signal and that is configured to output a channel signal obtained from the television signal, a communication component, and a data storage component that stores a channel list therein. The channel list lists a plurality of television channels. The method includes:
establishing a database in the data storage component, the database including a plurality of storage segments that are associated respectively with a plurality of non-overlapping specific time slots within a day, each of the storage segments including a list of viewing history within the respective one of the specific time slots;
while the television device is in a power-up state and the demodulator is outputting a specific channel signal that is carried by the television signal and that is associated with one of the television channels, determining a duration in which the demodulator continuously outputs the specific channel signal;
when it is determined that the duration is longer than a predetermined threshold, generating a current viewing entry that includes an identification number of the one of the television channels, and storing the current viewing entry as an entry in the list of viewing history in one of the storage segments associated with one of the specific time slots that covers a time instant when the demodulator is outputting the specific channel signal; and
upon receiving, by the communication component, a power-up command instructing the television device to power up,
switching from a power-down state to the power-up state and determining a time instant of receipt of the power-up command,
identifying a corresponding one of the storage segments associated with the specific time slot that covers the time instance of receipt of the power-up command,
determining whether the list of viewing history in the corresponding one of the storage segments has any viewing entry,
when it is determined that the list of viewing history has at least one viewing entry, identifying a selected one of the television channels listed in the channel list, based on the list of viewing history stored in the corresponding one of the storage segments,
controlling, by the processor, the demodulator to perform a demodulating operation on the television signal so as to obtain a channel signal from the selected one of the television channels, and to output the channel signal.

Another object of the disclosure is to provide a television device that is capable of executing the abovementioned method.

According to one embodiment of the disclosure, the television device includes a processor, a demodulator, a communication component and a data storage component.

The demodulator is coupled to the processor, receives a television signal, and is configured to output a channel signal obtained from the television signal.

The communication component is coupled to the processor. The data storage component is coupled to the processor and stores a channel list therein. The channel list lists a plurality of television channels.

The processor is programmed to:
establish a database in the data storage component, the database including a plurality of storage segments that are associated respectively with a plurality of non-overlapping specific time slots within a day, each of the storage segments including a list of viewing history within the respective one of the specific time slots;
while the television device is in a power-up state and the demodulator is outputting a specific channel signal that is included in the television signal and that is associated with one of the television channels, determine a duration in which the demodulator continuously outputs the specific channel signal from the one of the television channels;
when it is determined that the duration is longer than a predetermined threshold, generate a current viewing entry that includes an identification number of the one of the television channels, and store the current viewing entry as an entry in the list of viewing history in one of the storage segments that is associated with one of the specific time slots that covers a time instant when the demodulator is outputting the specific channel signal; and
wherein, upon receiving, by the communication component, a power-up command instructing the television device to power up, the processor is programmed to
   switch from a power-down state to the power-up state and determine a time instant of receipt of the power-up command,
   identify one of the storage segments associated with one of the specific time slots that covers the time instance of receipt of the power-up command,
   determine whether the list of viewing history in the one of the storage segments has any viewing entry,
   when it is determined that the list of viewing history has at least one viewing entry, identify a selected one of the television channels included in the channel list, based on the list of viewing history stored in the one of the storage segments,
control the demodulator to perform a demodulating operation on the television signal so as to obtain a channel signal from the selected one of the television channels, and to output the channel signal.

Other features and advantages of the disclosure will become apparent in the following detailed description of the embodiments with reference to the accompanying drawings, of which:
Figure 1 is a block diagram illustrating a television device according to one embodiment of the disclosure;
Figure 2 is a flow chart illustrating steps of a method for automatically selecting a television channel according to one embodiment of the disclosure;
Figure 3 illustrates a database established in a data storage component including a number of storage segments;
Figure 4 illustrates content stored in an exemplary storage segment;
Figure 5 illustrates a viewing entry stored in the storage segment being replaced according to one embodiment of the disclosure;
Figure 6 illustrates a viewing entry stored in the storage segment being replaced according to another embodiment of the disclosure; and
Figure 7 illustrates a current viewing entry being stored in multiple time slots.

Before the disclosure is described in greater detail, it should be noted that where considered appropriate, reference numerals or terminal portions of reference numerals have been repeated among the figures to indicate corresponding or analogous elements, which may optionally have similar characteristics.

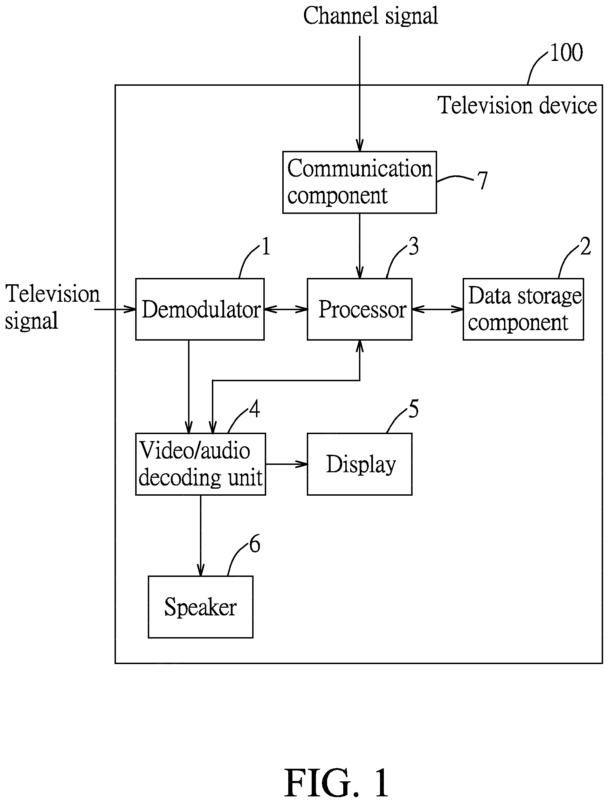

Figure 1 is a block diagram illustrating a television device 100 according to one embodiment of the disclosure.

The television device 100 includes a demodulator 1, a data storage component 2, a processor 3, a video/audio decoding unit 4, a display 5, a speaker 6 and a communication component 7. The display 5 and the speaker 6 are coupled to the video/audio decoding unit 4.

The demodulator 1 is configured to receive a television signal from one or more signal sources, and may be, for example, an over-the-air (OTA) television signal, a satellite television signal, a cable television signal, a media on demand (MOD) signal, etc. The television signal may be in the form of an analog signal or a digital signal.

The data storage component 2 stores a channel list therein. The channel list lists a plurality of television channels that can be viewed using the television device 100. Specifically, a channel signal provided by each of the television channels listed in the channel list is carried by the television signal received by the demodulator 1. Each of the plurality of television channels may be designated with a unique identification number.

The processor 3 is coupled to the demodulator 1, the data storage component 2, the video/audio decoding unit 4 and the communication component 7, and may include, but not limited to, a single core processor, a multi-core processor, a dual-core mobile processor, a microprocessor, a microcontroller, a digital signal processor (DSP), a field-programmable gate array (FPGA), an application specific integrated circuit (ASIC), a radio-frequency integrated circuit (RFIC), and/or the like.

The communication component 7 may include a short-range wireless communicating module supporting a short-range wireless communication network using a wireless technology of Bluetooth® and/or Wi-Fi, etc., and a mobile communicating module supporting telecommunication using Long-Term Evolution (LTE), the third generation (3G) and/or fourth generation (4G) of wireless mobile telecommunications technology, and/or the like.

In use, the communication component 7 is capable of communicating with a remote controller (not depicted in the drawings) to receive a channel selection signal including the identification number of a selected one of the television channels from the remote controller. It is noted that a user may directly input the identification number as the channel selection signal, or press specific buttons on the remote controller such as a "next channel" button or a "previous channel" button to change to specific channels.

In some embodiments, the channel selection signal may be inputted using a control pad (not depicted in the drawings) installed on the television device 100.

In response to receipt of the channel selection signal, the communication component 7 transmits the channel selection signal to the processor 3.

In turn, the processor 3 obtains the identification number included in the channel selection signal, and controls the demodulator 1 to perform a demodulation operation on the television signal based on the identification number, so as to obtain, from the television signal, a channel signal associated with one of the television channels that is designated with the identification number indicated by the channel selection signal.

Then, the processor 3 controls the video/audio decoding unit 4 to perform a decoding operation on the channel signal so as to obtain a video signal and an audio signal from the channel signal. The video signal and the audio signal are simultaneously transmitted to the display 5 and the speaker 6, respectively. In response, the display 5 displays the video signal, and the speaker 6 plays the audio signal.

The processor 3 is configured to, when the television device 100 is switched from a power-up state to a power-down state, record the identification number of the television channel that is being outputted by the demodulator 1 at the time of switching. Afterward, when the television device 100 is switched from the power-down state to the power-up state again, the processor 3 controls the demodulator 1 to demodulate the television signal based on the identification number recorded by the processor 3.

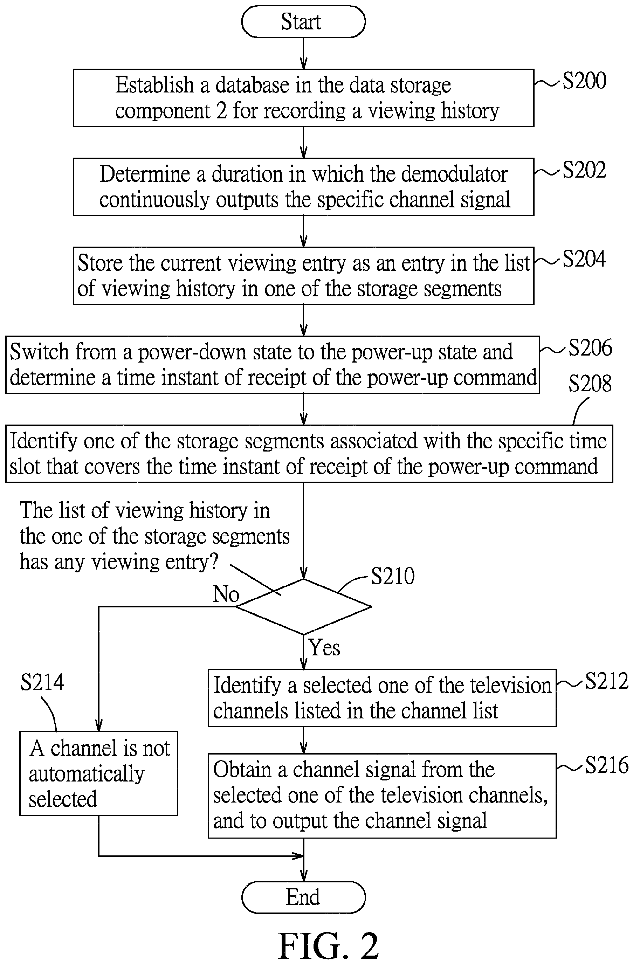

Further referring to Figure 2, a flow chart illustrating steps of a method for automatically selecting a television channel is provided according to one embodiment of the disclosure.

In step 200, a database 22 is established in the data storage component 2 for recording a viewing history that is associated with the television device 100.

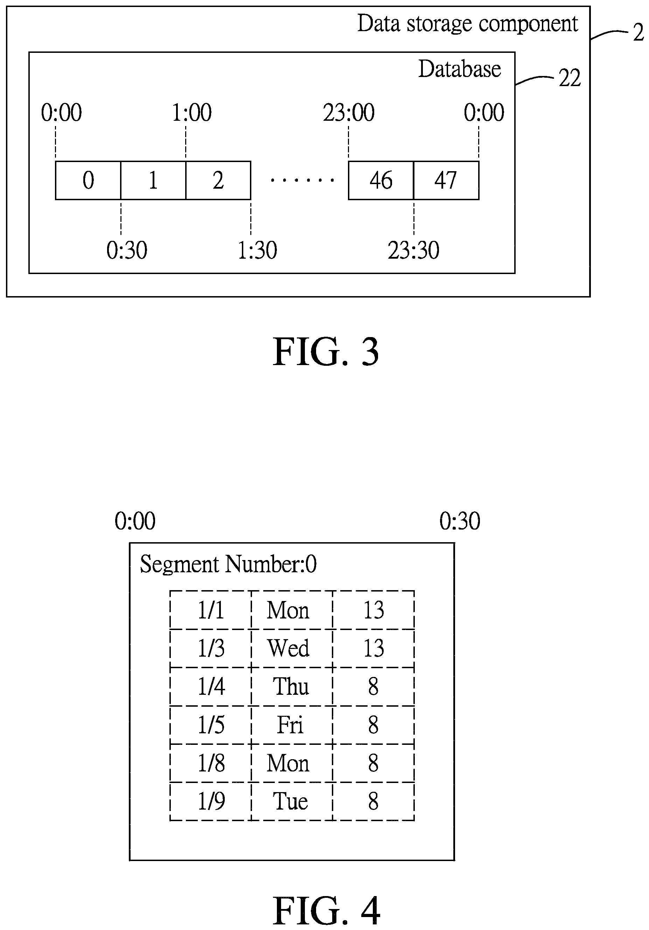

Specifically, the database 22 includes a plurality of storage segments. Each of the storage segments is designated to be associated with a specific time slot within a day, and includes a list of viewing history corresponding to the specific time slot. The specific time slots associated respectively with the storage segments are non-overlapping with one another. For example (see Figure 3), the database 22 includes forty-eight storage segments (numbered 0 to 47) and each of the specific time slots has a thirty-minute duration (e.g., the storage segment "0" is associated with the time slot 00:00 to 00:30, the storage segment "1" is associated with the time slot 00:30 to 01:00, etc.). It should be noted that, although an end point of one time slot is shown to be the same as a start point of a next time slot in the example shown in Figure 3, there may actually be a minimal difference between these two points.

It is noted that in some embodiments, the specific time slots associated with all storage segments may cover only a part of one day that the television device 100 is regularly powered on (e.g., from 07:00 to 00:00, from 17:00 to 00:00, etc.). Additionally, various durations for one time slot may be employed (e.g., twenty minutes) .

In this embodiment, the television device 100 is programmed to provide an automatic channel selection function that can be activated.

When the automatic channel selection function is activated, the processor 3 is configured to, while the television device 100 is in the power-up state and the demodulator 1 is outputting a specific channel signal carried by the television signal, in step 202, determine a duration in which the demodulator 1 continuously outputs the specific channel signal from the one of the television channels.

In step 204, the processor 3 is configured to, when it is determined that the duration is longer than a predetermined threshold (e.g., 10 minutes), generate a current viewing entry that includes an identification number of the one of the television channels (e.g., channel number 13). Then, the processor 3 stores the current viewing entry as an entry in the list of viewing history in one of the storage segments associated with one of the specific time slots that covers a time instant when the demodulator 1 outputs the specific channel signal.

Figure 4 illustrates a number of exemplary entries of the list of the viewing history that is stored in the storage segment "0". In this example, each of the entries in the list has a date, a day of the week, and the identification number of the channel that was viewed on that date in the specific time slot. In this example, it is shown that on six different days, in the time slot 00:00 to 00:30, the television device 100 is controlled to broadcast channel number 13 or channel 8 for at least 10 minutes each.

In this embodiment, for each of the storage segments, the viewing entries are kept up to a predetermined limit . For example, the predetermined limit may be six. When there are already six viewing entries kept in the storage segment "0", and a new viewing entry is to be added to the storage segment "0", the processor 3 first determines whether a previously-recorded viewing entry recorded on the same date as the current viewing entry exists in the storage segment "0". When it is determined that a previously-recorded viewing entry recorded on the same date as the current viewing entry exists, the processor 3 records one of the previously-recorded viewing entry and the current viewing entry and discards the other one of the previously-recorded viewing entry and the current viewing entry. On the other hand, when it is determined that a previously-recorded viewing entry recorded on the same date as the current viewing entry does not exist, the processor 3 discards an oldest one of the viewing entries before storing the current viewing entry in the storage segment "0".

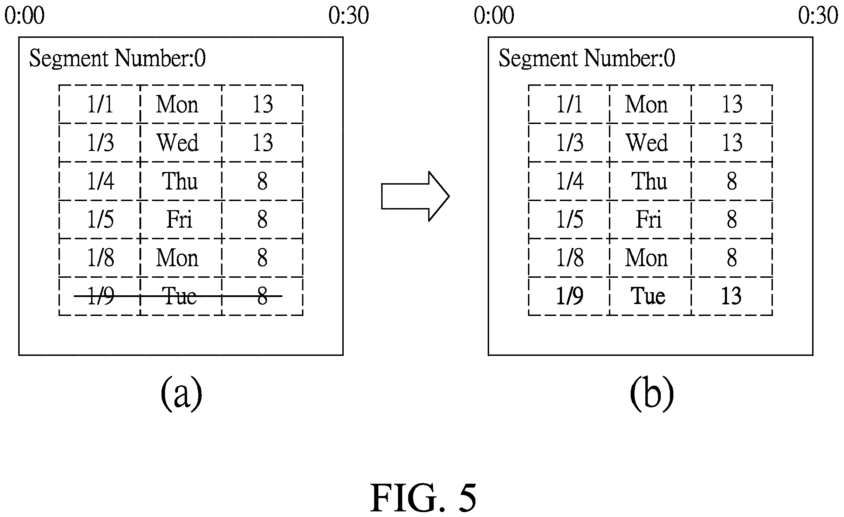

In the example of Figure 5, when it is determined that between 00:00 and 00:30 on January 9, a new viewing entry is to be generated, the processor 3 determines that since one viewing entry dated January 9 already exists (see Part (a)), the existing viewing entry dated January 9 may be discarded and replaced by the new viewing entry (see Part (b)).

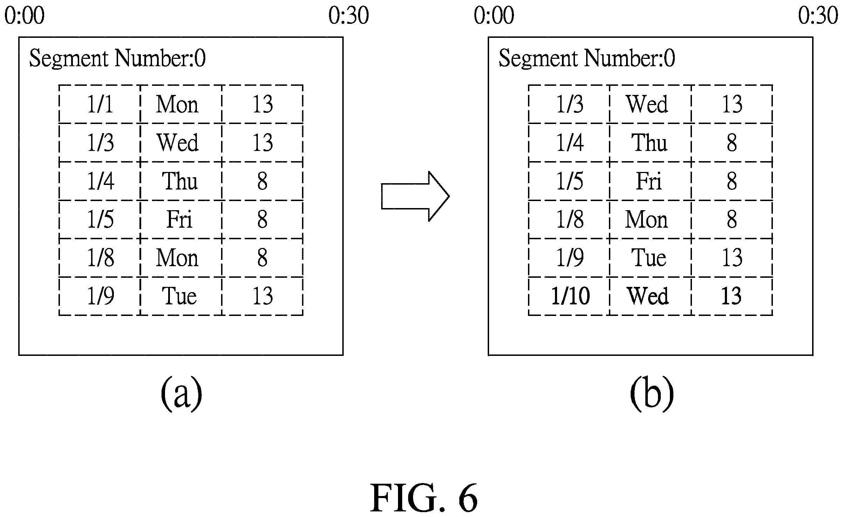

In the example of Figure 6, when it is determined that between 00:00 and 00:30 on January 10, a new viewing entry is to be generated, the processor 3 determines that since no viewing entry dated January 10 exists (see Part (a)), the existing viewing entry dated January 1, which is the oldest one among the six kept viewing entries, may be discarded and the new viewing entry is added (see Part (b)).

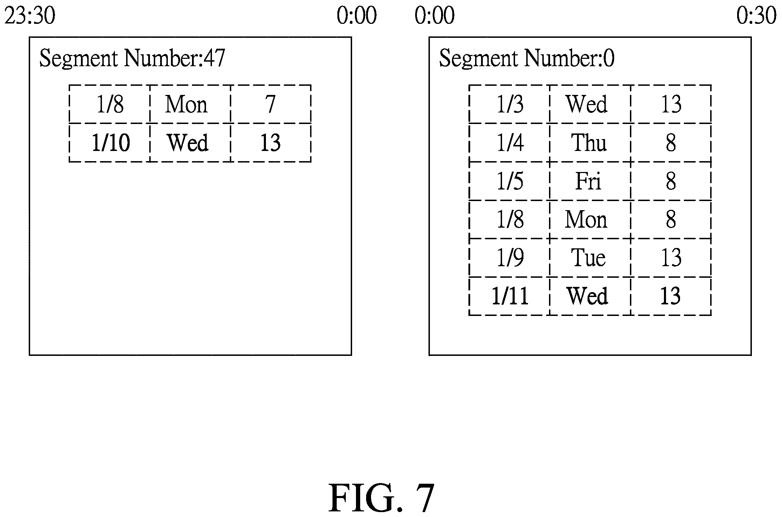

In some embodiments, when it is determined that the duration in which the demodulator 1 continuously outputs the specific channel signal spans over multiple ones of the specific time slots (e.g., broadcasting from 23:30 to 0:30 of a next day), the processor 3 stores the current viewing entry in each of those storage segments that are respectively associated with the multiple ones of specific time slots over which the duration spans (e.g., the storage segments "47" and "0" (of the next day), as shown in Figure 7).

When the database 22 has been established, in the event that the television device 100 is powered up, the processor 3 is configured to perform a channel selection operation.

Specifically, the user may operate the remote controller or the control pad on the television device 100 to transmit a power-up command to the communication component 7, instructing the television device 100 to power up.

In response to receipt of the power-up command from the communication component 7, in step 206, the processor 3 switches from a power-down state to the power-up state and determines a time instant of receipt of the power-up command.

Then, in step 208, the processor 3 identifies one of the storage segments associated with the specific time slot that covers the time instant of receipt of the power-up command. For example, when the time instant is 00:15, the storage segment "0" is identified.

In step 210, the processor 3 determines whether the list of viewing history in the one of the storage segments has any viewing entry.

When it is determined that the list of viewing history in the one of the storage segments has at least one viewing entry, the flow proceeds to step 212, in which the processor 3 identifies a selected one of the television channels listed in the channel list, based on the list of viewing history stored in the one of the storage segments. Otherwise, the flow proceeds to step 214, in which the processor 3 does not automatically select a channel. In such a case, the channel that was last being viewed may be selected.

In one example shown in Figure 4, when on January 10, the television device 100 receives a power-up command at 00:05, the storage segment "0", which includes at least one entry of viewing history, is identified. Based on the list of viewing history, it is determined that channel "8" is the most frequently watched channel in this time slot. As a result, the processor 3 identifies channel "8" as a selected one of the television channels.

In some examples, when it is determined that an identification number appears among the plurality of viewing entries more times than a predetermined floor number, the processor 3 identifies one of the television channels associated with this identification number as the selected one of the television channels . For example, the predetermined floor number may be three.

In some examples, when it is determined that multiple identification numbers each appear among the plurality of viewing entries a same number of times that is not less than the predetermined floor number, the processor 3 determines one of these identification numbers included in one of the plurality of viewing entries that was most recently recorded, and identifies one of the television channels associated with the one of these identification numbers as the selected one of the television channels.

In one example shown in Part (b) of Figure 5, when on January 10, the television device 100 receives a power-up command at 00:05, the storage segment "0" , which includes at least one entry of viewing history, is identified. Based on the list of viewing history, since both channels "8" and "13" appear three times, the processor 3 may identify channel "13", which was most recently recorded, as the selected one of the television channels.

Then, in step 216, the processor 3 controls the demodulator 1 to perform a demodulating operation on the television signal so as to obtain a channel signal from the selected one of the television channels, and to output the channel signal. In such a manner, the effect of automatically selecting a television channel can be achieved for the user.

In some embodiments, the channel list may be updated by a service provider that outputs the television signal, and the identification numbers of the television channels may be changed.

In such a case, an incoming channel list may be incorporated in a digital television signal and transmitted to the demodulator 1.

In response to receipt of the digital television signal, the processor 3 controls the video/audio decoding unit 4 to obtain the incoming channel list from the digital television signal.

Afterward, the processor 3 compares the incoming channel list with the channel list stored in the data storage component 2.

When it is determined that the incoming channel list is not identical with the channel list stored in the data storage component 2, the processor 3 replaces the channel list stored in the data storage component 2 with the incoming channel list, selects one of the television channels that was being viewed when the television device 100 last received a power-off signal as the selected one of the television channels, and clears the list of viewing history stored in each of the storage segments of the database 22.

It is noted that in cases where the automatic channel selection function is not activated, the television device 100 has been reset, or the time instant is unknown, the television device 100 may operate in a default mode where one of the television channels that was being viewed when the television device 100 last received a power-off signal is selected.

To sum up, the embodiments of the disclosure provide a method and a television device 100 that establishes a database 22 that contains the viewing history of the television device 100 associated with different time slots of a day. Additionally, an automatic channel selection function may be activated such that the television device 100 is configured to, when powered up, automatically select one television channel based on the viewing history. In this manner, the user is able to watch a potentially preferred television channel without having to manually operate the remote controller or the control pad to switch television channels.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. A method for automatically selecting a television channel, to be implemented by a television device (100) that includes a processor (3), a demodulator (1) that receives a television signal and that is configured to output a channel signal obtained from the television signal, a communication component (7), and a data storage component (2) that stores a channel list therein, the channel list listing a plurality of television channels, the method being **characterized by**:
establishing a database (22) in the data storage component (2), the database (22) including a plurality of storage segments that are associated respectively with a plurality of non-overlapping specific time slots within a day, each of the storage segments including a list of viewing history within the respective one of the specific time slots;
while the television device (100) is in a power-up state and the demodulator (1) is outputting a specific channel signal that is carried by the television signal and that is associated with one of the television channels, determining a duration in which the demodulator (1) continuously outputs the specific channel signal;
when it is determined that the duration is longer than a predetermined threshold, generating a current viewing entry that includes an identification number of the one of the television channels, and storing the current viewing entry as an entry in the list of viewing history in one of the storage segments associated with one of the specific time slots that covers a time instant when the demodulator (1) is outputting the specific channel signal; and
upon receiving, by the communication component (7), a power-up command instructing the television device (100) to power up,
switching from a power-down state to the power-up state and determining a time instant of receipt of the power-up command,
identifying a corresponding one of the storage segments associated with the specific time slot that covers the time instance of receipt of the power-up command,
determining whether the list of viewing history in the corresponding one of the storage segments has any viewing entry,
when it is determined that the list of viewing history has at least one viewing entry, identifying a selected one of the television channels listed in the channel list, based on the list of viewing history stored in the corresponding one of the storage segments,
controlling, by the processor (3), the demodulator (1) to perform a demodulating operation on the television signal so as to obtain a channel signal from the selected one of the television channels, and to output the channel signal.

2. The method of Claim 1, **characterized in that** storing the current viewing entry includes:
when it is determined that the duration in which the demodulator (1) continuously outputs the specific channel signal spans over multiple ones of the specific time slots, storing the current viewing entry in each of those of the storage segments associated respectively with the multiple ones of specific time slots over which the duration spans.

3. The method of any one of Claims 1 and 2, **characterized in that** storing the current viewing entry includes, when it is determined that a number of viewing entries stored in the corresponding one of the storage segments associated with the one of the specific time slots is greater than a predetermined limit:
determining whether a previously-recorded viewing entry recorded on the same date as the current viewing entry exists in the corresponding one of the storage segments;
when it is determined that a previously-recorded viewing entry recorded on the same date as the current viewing entry exists, recording one of the previously-recorded viewing entry and the current viewing entry and discarding the other one of the previously-recorded viewing entry and the current viewing entry; and
when it is determined that a previously-recorded viewing entry recorded on the same date as the current viewing entry does not exist, discarding an oldest one of the viewing entries and then storing the current viewing entry in the corresponding one of the storage segments.

4. The method of any one of Claims 1 to 3, **characterized in that** identifying a selected one of the television channels includes:
when it is determined that a plurality of viewing entries are stored in the corresponding one of the storage segments associated with the one of the specific time slots, identifying an identification number that appears most frequently among the plurality of viewing entries, and identifying one of the television channels that is associated with the identification number as the selected one of the television channels.

5. The method of any one of Claims 1 to 3, **characterized in that** identifying a selected one of the television channels includes:
when it is determined that a plurality of viewing entries are stored in the corresponding one of the storage segments associated with the one of the specific time slots, and that one identification number appears among the plurality of viewing entries more times than a predetermined floor number, identifying one of the television channels that is associated with said one identification number as the selected one of the television channels.

6. The method of any one of Claims 1 to 3, **characterized in that** identifying a selected one of the television channels includes:
when it is determined that a plurality of viewing entries are stored in the corresponding one of the storage segments associated with the one of the specific time slots, and that multiple identification numbers each appear among the plurality of viewing entries a same number of times that is not less than a predetermined floor number, determining one of the identification numbers included in one of the multiple viewing entries that has been most recently recorded, and identifying one of the television channels that is associated with the one of the identification numbers as the selected one of the television channels.

7. The method of any one of Claims 1 to 6, the demodulator (1) being configured to receive a digital television signal that includes an incoming channel list, the television device (100) further including a video/audio decoding unit (4), the method further **characterized by**:
in response to receipt of the digital television signal, obtaining, by the video/audio decoding unit (4), the incoming channel list included in the digital television signal;
comparing the incoming channel list with the channel list stored in the data storage component (2); and
when it is determined that the incoming channel list is not identical with the channel list stored in the data storage component (2),
replacing the channel list stored in the data storage component (2) with the incoming channel list,
selecting one of the television channels that was viewed when the television device (100) last received a power-off signal as the selected one of the television channels, and
clearing the list of viewing history stored in each of the storage segments of the database (22).

8. A television device (100) including:
a processor (3);
a demodulator (1) that is coupled to said processor (3), that receives a television signal, and that is configured to output a channel signal obtained from the television signal;
a communication component (7) that is coupled to said processor (3); and
a data storage component (2) that is coupled to said processor (3) and that stores a channel list therein, the channel list listing a plurality of television channels,
**characterized in that** said processor (3) is programmed to:
establish a database (22) in said data storage component (2), the database (22) including a plurality of storage segments that are associated respectively with a plurality of non-overlapping specific time slots within a day, each of the storage segments including a list of viewing history within the respective one of the specific time slots;
while said television device (100) is in a power-up state and said demodulator (1) is outputting a specific channel signal that is included in the television signal and that is associated with one of the television channels, determine a duration in which said demodulator (1) continuously outputs the specific channel signal from the one of the television channels;
when it is determined that the duration is longer than a predetermined threshold, generate a current viewing entry that includes an identification number of the one of the television channels, and store the current viewing entry as an entry in the list of viewing history in one of the storage segments that is associated with one of the specific time slots that covers a time instant when said demodulator (1) is outputting the specific channel signal; and
wherein, upon receiving, by said communication component (7), a power-up command instructing the television device (100) to power up, said processor (3) is programmed to
switch from a power-down state to the power-up state and determine a time instant of receipt of the power-up command,
identify one of the storage segments associated with one of the specific time slots that covers the time instance of receipt of the power-up command,
determine whether the list of viewing history in the one of the storage segments has any viewing entry,
when it is determined that the list of viewing history has at least one viewing entry, identify a selected one of the television channels included in the channel list, based on the list of viewing history stored in the one of the storage segments,
control said demodulator (1) to perform a demodulating operation on the television signal so as to obtain a channel signal from the selected one of the television channels, and to output the channel signal.

9. The television device (100) of Claim 8, **characterized in that** in storing the current viewing entry, said processor (3) is programmed to:
when it is determined that the duration spans over multiple ones of the specific time slots, store the current viewing entry in each of those of the storage segments respectively associated with the multiple ones of specific time slots over which the staying duration spans.

10. The television device (100) of any one of Claims 8 and 9, **characterized in that** in storing the current viewing entry, said processor (3) is programmed to, when it is determined that a number of viewing entries stored in the one of the storage segments associated with the one of the specific time slots is greater than a predetermined limit:
determine whether a previously-recorded viewing entry recorded on the same date as the current viewing entry exists in the one of the storage segments;
when it is determined that a previously-recorded viewing entry recorded on the same date as the current viewing entry exists, record one of the previously-recorded viewing entry and the current viewing entry and discard the other one of the previously-recorded viewing entry and the current viewing entry; and
when it is determined that a previously-recorded viewing entry recorded on the same date as the current viewing entry does not exist, discard an oldest one of the viewing entries and then store the current viewing entry in the one of the storage segments.

11. The television device (100) of any one of Claims 9 to 10, **characterized in that** in identifying a selected one of the television channels, said processor (3) is programmed to:
when it is determined that a plurality of viewing entries are stored in the one of the storage segments associated with the one of the specific time slots, identify an identification number that appears most frequently among the plurality of viewing entries, and identify one of the television channels that is associated with the identification number as the selected one of the television channels.

12. The television device (100) of any one of Claims 9 to 11, **characterized in that** in identifying a selected one of the television channels, said processor (3) is programmed to:
when it is determined that a plurality of viewing entries are stored in the one of the storage segments associated with the one of the specific time slots, and that one identification number appears among the plurality of viewing entries more times than a predetermined floor number, identify one of the television channels that is associated with said one identification number as the selected one of the television channels.

13. The television device (100) of any one of Claims 9 to 11, **characterized in that** in identifying a selected one of the television channels, said processor (3) is programmed to:
when it is determined that a plurality of viewing entries are stored in the one of the storage segments associated with the one of the specific time slots, and that multiple identification numbers each appear among the plurality of viewing entries a same number of times that is not less than a predetermined floor number, determine one of the identification numbers included in one of the plurality of viewing entries that has been most recently recorded, and identify one of the television channels that is associated with the one of the identification numbers as the selected one of the television channels.

14. The television device (100) of any one of Claims 9 to 11, further including a video/audio decoding unit (4) that is coupled to said demodulator (1), a display (5), and a speaker (6) that are coupled to said video/audio decoding unit (4), **characterized in that** said video/audio decoding unit (4) is configured to:
receive the channel signal from said demodulator (1);
perform a decoding operation on the channel signal to obtain a video signal and an audio signal; and
simultaneously transmit the video signal and the audio signal to said display (5) and said speaker (6), respectively.

15. The television device (100) of any one of Claims 9 to 14, wherein said demodulator (1) is configured to receive a digital television signal that includes an incoming channel list, said television device (100) further including a video/audio decoding unit (4), and being **characterized in that**:
said video/audio decoding unit (4) is programmed to, in response to receipt of the digital television signal, obtain the incoming channel list included in the digital television signal;
said processor (3) is programmed to compare the incoming channel list with the channel list stored in said data storage component (2); and
said processor (3) is programmed to, when it is determined that the incoming channel list is not identical with the channel list stored in said data storage component (2),
replace the channel list stored in said data storage component (2) with the incoming channel list,
select one of the television channels that was viewed when said television device (100) last received a power-off signal as the selected one of the television channels, and
clear the list of viewing history stored in each of the storage segments of the database (22).
